# FASCICULE DE BREVET EUROPEEN

(11) **EP 1 111 986 B1**
(45) Date de publication et mention de la délivrance du brevet: **23.07.2003**
(21) Numéro de dépôt: 99941718.1
(22) Date de dépôt: 08.09.1999
(51) Int. Cl.: A01D 89/00, A01D 78/10

(54) **DISPOSITIF DE ROULEMENT POUR ENGIN AGRICOLE**
FAHRWERK FÜR LANDWIRTSCHAFTLICHE MASCHINE
RUNNING DEVICE FOR FARM MACHINE

(30) Priorité: 08.09.1998 FR 9811193
(43) Date de publication de la demande: 04.07.2001
(73) Titulaire: Idass Societe Anonyme, Z.I. Ormes, 45140 Ormes (FR)
(72) Inventeur: COISNON, René, F-45480 Outarville (FR)
(74) Mandataire: Puiroux, Guy
(86) Numéro de dépôt international: FR9902135
(87) Numéro de publication internationale: WO00013481

(56) Documents cités:
- EP-A- 0 386 430
- EP-A- 0 614 604
- DE-A- 4 003 203
- DE-B- 1 223 599
- DE-U- 8 811 010

## Description

La présente invention concerne un dispositif de roulement pour engin agricole et notamment pour les engins destinés au ramassage des andains sur le sol de type pick-up qui sont poussés par un engin automoteur tel qu'une ensileuse.

On sait que les sols de culture sur lesquels les engins de ce type sont amenés à se déplacer possèdent habituellement des surfaces particulièrement accidentées dont les creux et les bosses impriment au pick-up, au cours de son déplacement, des chocs répétitifs qui ont pour effet de porter atteinte à l'intégrité de celui-ci.

On a proposé, dans l'état antérieur de la technique, des engins agricoles équipés à chacune de leurs extrémités, de moyens de roulement constitués d'une roue avant et d'une roue arrière dont les axes de rotation sont réunis par un montant rectiligne articulé en son centre sur le châssis, ce qui a pour effet d'assurer un "lissage" de la courbe du terrain parcourue.

Un dispositif de roulement pour engin de type remorqué est déjà connu par exemple de DE-A-4003203.

La présente invention a pour but d'améliorer les dispositifs de ce type en proposant un dispositif qui permet de disposer sur ce type d'engin des roues dont le diamètre est plus important que celui utilisable dans l'état antérieur de la technique, ce qui a pour effet d'augmenter la surface de contact de celles-ci avec le sol.

La présente invention a ainsi pour objet un dispositif de roulement pour engin de type remorqué, et notamment pour pick-up, disposé à chacune des extrémités de celui-ci, comprenant au moins une roue avant et une roue arrière dont les axes de rotation sont solidaires d'au moins un montant qui est monté à rotation, par rapport au châssis de l'engin, autour d'un axe parallèle à celui des roues, caractérisé en ce que ce montant est en forme de V, de façon que l'axe de rotation de ce montant sur le châssis soit situé au-dessous de l'axe de rotation de chacune des roues. Ledit axe de rotation du montant est préférentiellement situé au niveau de l'intersection des deux branches du V.

Le dispositif peut comporter deux roues qui pourront par exemple être situées dans un même plan. Mais également au moins l'une des roues de l'une des extrémités, avant ou arrière, pourra ne pas être disposée dans le même plan que l'une des roues de l'autre extrémité.

Dans un mode de mise en oeuvre de l'invention au moins une roue avant se trouve à l'extérieur de l'engin et au moins l'une des roues arrière se trouve à l'intérieur, sous celui-ci.

Dans un autre mode de mise en oeuvre de l'invention le dispositif comprend des moyens de réglage de la différence de hauteur séparant l'axe de rotation du montant et l'axe de rotation d'une roue. Les moyens de réglage peuvent être tels que le montant comprend un longeron externe s'étendant vers l'avant et un longeron interne s'étendant vers l'arrière au moins l'un de ces longerons étant pourvu, à son extrémité libre, de moyens de fixation d'une plaque de réglage sur laquelle est monté un moyeu supportant une roue.

L'un des avantages du pick-up suivant l'invention est qu'il permet d'augmenter la surface de contact des roues avec le sol. Une telle augmentation est due tout d'abord à l'adjonction d'au moins une seconde roue. Mais, de plus, la présente invention permet de réaliser un dispositif de roulement dans lequel le point d'application de l'effort qui est transmis aux roues se situe plus près du sol que l'axe de rotation de ces roues. Outre le fait que l'on améliore ainsi la stabilité, il en résulte qu'il est dès lors possible de monter sur l'engin des roues dont le diamètre est plus important que celui utilisable dans l'état antérieur de la technique, ce qui a pour effet d'augmenter la surface de contact de celles-ci avec le sol et d'améliorer l'adhérence de l'engin.

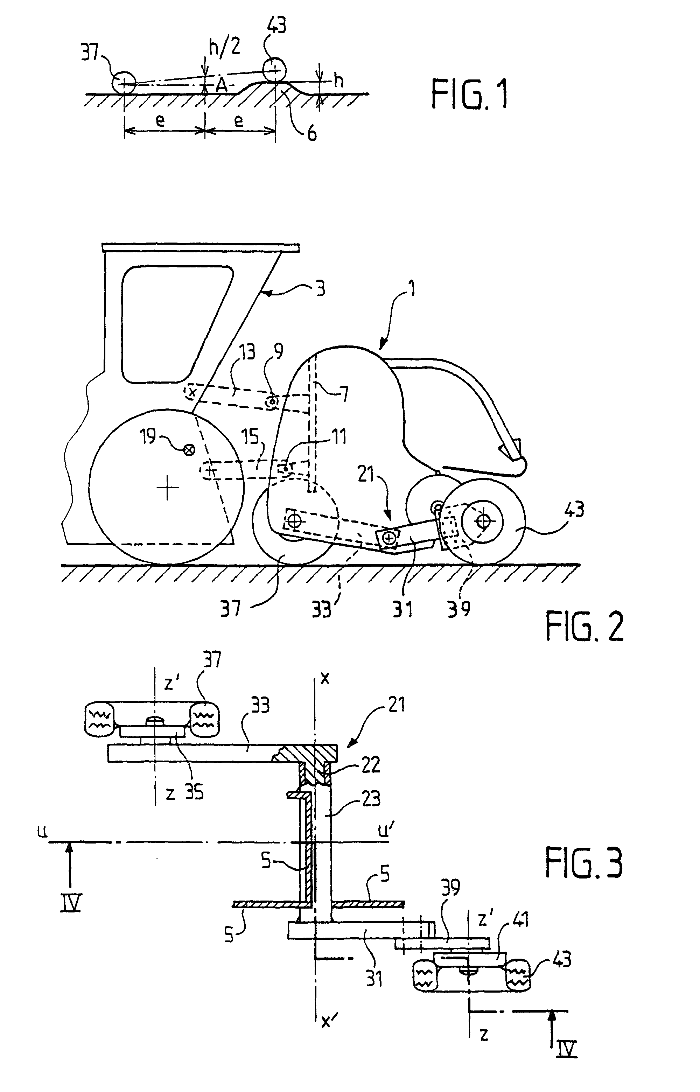

Par ailleurs, lorsque, comme représenté sur la figure 1, l'une des roues avant d'un pick-up équipé d'un dispositif de roulement suivant l'invention, rencontre un petit obstacle de hauteur h, le point d'application A des efforts entre les roues et le châssis se déplace quant à lui d'une hauteur qui est dans le rapport des bras de levier correspondants, c'est-à-dire ceux constitués d'une part par la distance de l'axe de la roue concernée avec le point d'application A et d'autre part la distance de ce même axe avec celui de l'autre roue. Ainsi si le point d'appui se trouve à égale distance entre les deux roues un tel déplacement sera ainsi égal à h/2, soit la moitié de la hauteur h de l'obstacle.

La présente invention permet également d'améliorer l'adhérence au sol du pick-up en permettant de décaler facilement dans deux plans verticaux différents les roues avant et arrière de celui-ci. On comprend dans ces conditions que la roue arrière ayant un chemin de roulement différent de celui de la roue avant, elle viendra en contact avec un sol vierge puisque ce dernier n'aura pas souffert du passage de la roue avant.

On décrira ci-après, à titre d'exemple non limitatif, une forme d'exécution de la présente invention, en référence au dessin annexé sur lequel :
La figure 1 est une représentation schématique illustrant l'un des avantages de l'invention.
La figure 2 est une vue de coté d'un dispositif ramasseur d'andains équipé du dispositif de roulement suivant l'invention et d'une ensileuse motrice représentée partiellement.
La figure 3 est une vue de dessus en coupe schématique partielle d'une variante de mise en oeuvre du dispositif de roulement suivant l'invention représenté sur la figure 2.
La figure 4 est une vue en coupe verticale partielle du dispositif représenté sur la figure 3 suivant la ligne IV-IV de celle-ci.
La figure 5 est une vue de dessus en coupe schématique partielle d'une variante de mise en oeuvre du dispositif de roulement suivant l'invention.
La figure 6 est une vue de dessus d'une autre variante de mise en oeuvre du dispositif de roulement suivant l'invention.
Les figures 7 et 8 sont des vues de côté schématique d'un pick-up mis en position relevée par une ensileuse motrice, représentée partiellement, respectivement avant et après basculement du dispositif de roulement suivant l'invention.

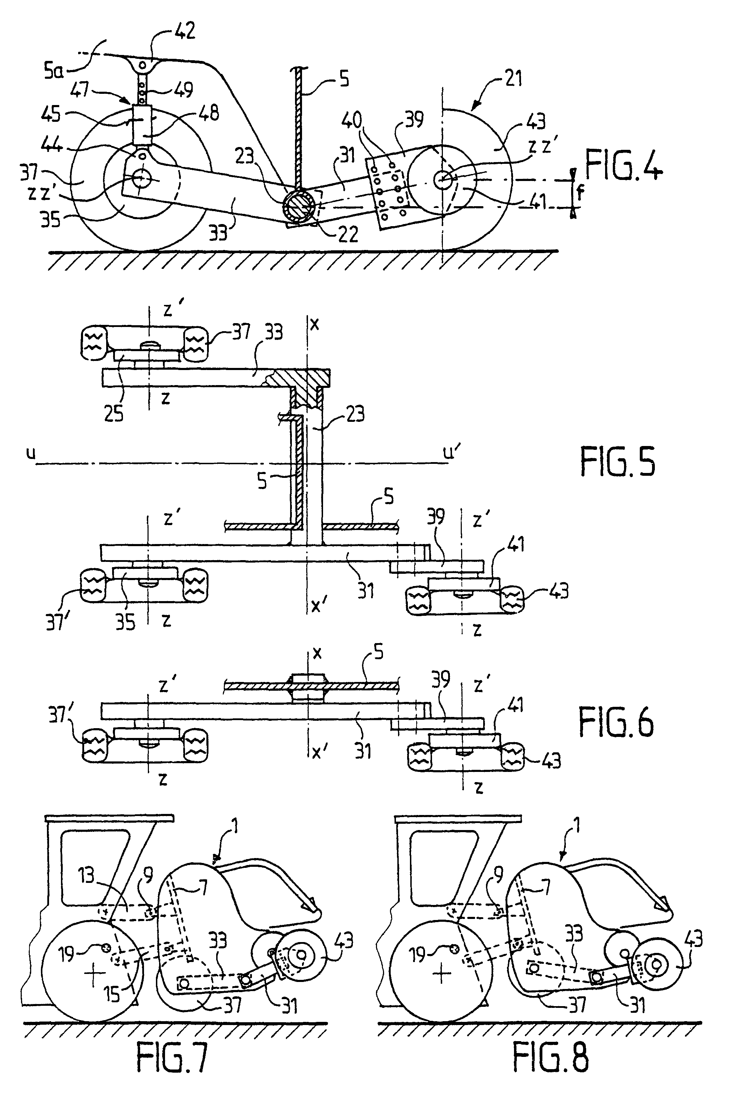

On a représenté sur les figures 2 à 4 un dispositif ramasseur d'andains 1, ou pick-up dont le déplacement est assuré par une ensileuse 3 représentée partiellement sur le dessin. Le pick-up 1 est constitué d'un châssis 5 qui est fixé à l'ensileuse 3 par l'intermédiaire d'un cadre oscillant 7 qui constitue un dispositif de fixation connu par l'état antérieur de la technique. Ce cadre oscillant 7 est fixé à l'ensileuse par deux points d'ancrage 9 et 11 au moyen de deux attelages de maintien respectifs (représentés de façon schématique sur les figures) à savoir un attelage supérieur 13 venant se fixer au point d'ancrage 9 et un attelage inférieur 15 qui est fixé au point d'ancrage inférieur 11. Les moyens de fixation du pick-up sur l'ensileuse permettent, en position de non utilisation, de faire pivoter le pick-up autour d'un axe de pivotement 19 de l'ensileuse, ainsi que représenté sur les figures 7 et 8.

Chacune des extrémités transversales du pick-up 1 est pourvue d'un dispositif de roulement 21 qui est destiné à assurer le déplacement sur le sol du pick-up 1 en cours de travail, lorsque celui-ci est poussé par l'ensileuse 3.

Le dispositif de roulement 21 suivant l'invention comprend un montant support de roues monté à rotation sur le châssis 5 autour d'un axe horizontal et transversal xx', ce support étant essentiellement constitué d'un arbre transversal 22 solidaire, à chacune de ses extrémités, d'au moins un longeron tubulaire longitudinal de section rectangulaire, à savoir un longeron antérieur 31 qui s'étend vers l'extérieur du pick-up et un longeron postérieur 33 qui s'étend sous celui-ci.

L'arbre 22 est monté à rotation à l'intérieur d'un élément tubulaire 23 solidaire du châssis 5. Le longeron postérieur 33 est pourvu, à son extrémité libre, d'un moyeu 35 supportant une roue arrière 37 d'axe zz' et le longeron antérieur 31 est pourvu, à son extrémité libre, de moyens de fixation d'une plaque de réglage 39 sur laquelle est monté un moyeu 41 supportant une roue avant 43 d'axe zz'. La plaque de réglage 39 est fixée sur le longeron antérieur 31 par boulonnage et comporte un ensemble de trous 40 permettant de fixer cette plaque 39 sur le longeron 31, en différentes positions plus ou moins éloignées de la base du pick-up, de façon à ajuster en hauteur la roue 43 et en conséquence ajuster la garde au sol de la partie avant du pick-up. La garde au sol de la roue 43 pourrait également être réglée par tout autre moyen. On pourrait ainsi pourvoir l'extrémité de l'arbre 22 de cannelures, et l'extrémité du longeron 31 opposée à la roue 43 d'un évidement de forme complémentaire permettant de lui conférer plusieurs positions angulaires possibles par rapport à l'arbre 22.

Suivant l'invention, comme on peut le voir plus particulièrement sur les figures 2 et 4, les longerons antérieur 31 et postérieur 33 du dispositif de roulement présentent, vu dans le sens horizontal et transversal, une forme en V ou plus précisément d'angle obtus ouvert vers le haut. De cette façon l'axe de rotation xx' du montant support des roues qui est situé au sommet du V ou de l'angle obtus, se trouve positionné sous l'axe de rotation de chacune des roues, antérieure et postérieure à une distance f de l'axe zz' de celles-ci ce qui permet d'utiliser des roues de plus grand diamètre qu'il ne serait possible de le faire si les longerons 31 et 33 étaient rectilignes.

La partie de châssis 5a située au-dessus de la roue arrière 37 comporte une bride de fixation 42, de même que la partie postérieure supérieure du longeron 33 qui possède une bride 44. Entre ces deux brides 42 et 44 on a disposé une biellette réglable 47 constituée d'un corps tubulaire 48 dont une extrémité est fixée sur la bride inférieure 44 à l'intérieur de laquelle est monté à coulissement un piston 49 dont l'extrémité libre est articulée sur la bride 42. La solidarisation du corps 48 et du piston 49 est effectuée par une goupille transversale 45 qui traverse le corps de biellette 48 et l'un d'une série de trous transversaux réalisés sur la longueur du piston 49, ce qui permet de solidariser le longeron 33 du châssis 5 en position de transport du pick-up.

Lorsque le pick-up se trouve en position de travail il est maintenu par l'ensileuse 3 au moyen des attelages supérieur 13 et inférieur 15, et son châssis 5 peut pivoter dans le plan constitué par le cadre intermédiaire de maintien 7, et le dispositif de roulement constitué à chacune de ses extrémités transversales par un ou deux longerons et les roues qui y sont fixées, peut pivoter autour de l'axe de rotation constitué par l'élément tubulaire 23, ce qui lui permet de s'adapter facilement aux différents accidents de terrain qu'il rencontre au cours de son déplacement.

Par ailleurs, ainsi que représenté sur la figure 1 lorsque l'une des roues avant 43 rencontre un obstacle 6 de hauteur h, le dispositif de roulement pivote autour d'un axe constitué par celui de sa roue arrière 37, si bien que l'élément tubulaire d'articulation 23 lié au châssis 5 de ce pick-up subit, quant à lui, un déplacement vertical sensiblement égal à la moitié de la hauteur h lorsque les longerons 33 et 31 ont sensiblement des longueurs e identiques. On comprend qu'un tel dispositif permet de minimiser de façon très substantielle les contraintes auxquelles l'engin se trouve ainsi soumis.

Par ailleurs, et comme mentionné précédemment, le dispositif suivant le présent mode de mise en oeuvre permet d'améliorer le contact avec le sol des roues arrière 37 dans la mesure où celles-ci sont amenées à rouler sur des surfaces de contact vierges, c'est-à-dire des surfaces sur lesquelles la roue antérieure 43 ne s'est pas elle-même déplacée.

Ainsi que représenté sur les figures 7 et 8, on constate que, lorsque le travail du pick-up est terminé, les attelages inférieur 15 et supérieur 13 de l'ensileuse son déplacés en position haute, faisant effectuer au pick-up une rotation centrée sur l'axe de rotation 19 de l'ensileuse 3. Dès lors, le pick-up tend à occuper une positon du type de celle représentée sur la figure 7, dans laquelle ses roues antérieures 43 se trouvent situées à un niveau supérieur à celles des roues postérieures 37 ce qui implique que la garde au sol de ces dernières se trouve relativement réduite.

Le dispositif de roulement suivant l'invention, dans la mesure où il peut pivoter autour de l'élément tubulaire transversal 23, permet d'augmenter la garde au sol du pick-up en position relevée. En effet on fera en sorte que le poids de la roue antérieure 43 du longeron antérieur 31 et de la plaque 39 soit supérieur au poids du longeron postérieur 33 et de la roue 37, si bien que, une fois le pick-up relevé ainsi que représenté sur la figure 7, le dispositif de roulement pivote autour de l'élément transversal 23 amenant ainsi la roue avant à descendre et la roue arrière 37 à monter, pour prendre une position telle que celle représentée sur la figure 8. On constate que, dans ces conditions, pour un relevage identique procuré par l'ensileuse, la garde au sol du pick-up se trouve très nettement améliorée.

Lorsque l'on souhaite améliorer le contact du dispositif de roulement avec le sol on peut, ainsi que représenté sur la figure 5, prolonger le longeron 31 vers l'arrière de façon que l'extrémité libre de celui-ci reçoive un moyeu 35' pourvu d'une roue 37'. On fera de préférence en sorte que les deux roues arrière 37 et 37' soient symétriques par rapport à l'axe uu' longitudinal passant par le centre de l'élément tubulaire 23.

Lorsque, dans des applications où les roues de l'engin ne présentent aucun problème quant à leur adhérence avec le sol sur lequel celui-ci se déplace, le dispositif de roulement suivant l'invention pourra ne posséder que deux roues, à savoir une roue avant 43 et une roue arrière 37', ces deux roues étant disposées sur le même longeron 31 si bien qu'elles se trouvent ainsi dans un même plan.

## Revendications

1. Dispositif de roulement pour engin de type remorqué et notamment pour pick-up, apte à être disposé à chacune des extrémités de celui-ci, comprenant au moins une roue avant (43) et une roue arrière (37) dont les axes de rotation sont solidaires d'au moins un montant (31,33) qui est monté à rotation, par rapport au châssis (5) de l'engin, autour d'un axe (xx',22) parallèle à celui des roues (37,43), **caractérisé en ce que** ce montant (31,33) est en forme de V de façon que lorsque les roues avant et arrière se trouvent sur un plan horizontal, l'axe de rotation (xx',22) de ce montant sur le châssis (5) soit situé au-dessous de l'axe de rotation (zz') de chacune des roues (37,43).

2. Dispositif suivant la revendication 1 **caractérisé en ce que** l'axe de rotation (xx') du montant est situé au niveau de l'intersection des deux branches du V.

3. Dispositif suivant l'une des revendications 1 ou 2 **caractérisé en ce qu'**il comprend des moyens de réglage de la différence de hauteur (f) existant entre l'axe de rotation (xx') du montant et l'axe de rotation (zz') d'une roue (37,43).

4. Dispositif suivant la revendication 3 dans lequel le montant comprend un longeron antérieur (31) et un longeron postérieur, **caractérisé en ce qu'**au moins l'un de ces longerons (31) est pourvu, à son extrémité libre, de moyens de fixation d'une plaque de réglage (39) sur laquelle est monté un moyeu (41) supportant une roue (43).

5. Dispositif suivant la revendication 4 **caractérisé en ce que** la plaque de réglage (39) est disposée sur le longeron externe (31).

6. Dispositif suivant la revendication 3 **caractérisé en ce que** l'axe (23) comporte au moins une partie cannelée et au moins l'un des montants (31,33) comporte un évidement de forme complémentaire lui permettant d'être solidarisé de la partie cannelée suivant différentes positions angulaires.

## Patentansprüche

1. Fahrwerk für eine geschleppte, insbesondere anhebbare Maschine, an deren jedem Ende es vorgesehen sein kann und mindestens ein vorderes Rad (43) und ein hinteres Rad (37) aufweist, deren Drehachsen fest mit mindestens einer Strebe (31, 33) verbunden sind, welche gegenüber dem Rahmen (5) der Maschine schwenkbar um eine zu den Achsen der Räder (37, 43) parallele Achse (xx', 22) montiert ist, **dadurch gekennzeichnet, dass** die Strebe (31, 33) derart V-förmig ausgebildet ist, dass, wenn sich die vorderen und hinteren Räder in einer horizontalen Ebene befinden, die Schwenkachse (xx', 22) der Strebe unterhalb der Drehachsen (zz') der Räder (37, 43) liegt.

2. Fahrwerk nach Anspruch 1, **dadurch gekennzeichnet, dass** die Schwenkachse (xx') der Strebe sich auf dem Niveau des Schnittpunktes der beiden Schenkel des V befindet.

3. Fahrwerk nach einem der Ansprüche 1 oder 2, **dadurch gekennzeichnet, dass** es eine Einrichtung zur Einstellung der Höhendifferenz (f) zwischen der Schwenkachse (xx') der Strebe und der Drehachse (zz') eines Rades (37, 43) aufweist.

4. Fahrwerk nach Anspruch 3, bei welchem die Strebe einen vorderen Längsträger (31) und einen hinteren Längsträger aufweist, **dadurch gekennzeichnet, dass** mindestens einer der Längsträger (31) an seinem freien Ende mit einer Einrichtung zur Befestigung einer Einstellplatte (39) versehen ist, an der wiederum ein Rad (43) mit einer Nabe (41) befestigt ist.

5. Fahrwerk nach Anspruch 4, **dadurch gekennzeichnet, dass** die Einstellplatte (39) am äußeren Längsträger (31) angeordnet ist.

6. Fahrwerk nach Anspruch 3, **dadurch gekennzeichnet, dass** die Achse (23) mindestens ein mit Rippen versehenes Teilstück aufweist und mindestens eine der Streben (31, 33) eine dazu komplementäre Aussparung aufweist, die eine feste Verbindung der Strebe in unterschiedlichen Winkelpositionen mit dem gerippten Teilstück ermöglicht.

## Claims

1. Running device for trailer-type machine, and particularly for pick-up, adapted to be arranged at each of the ends thereof, comprising at least one front wheel (43) and one rear wheel (37) of which the axles are made integral with at least one frame member (31,33) which is mounted for rotation relative to the body (5) of the machine, about an axis (xx',22) parallel to that of the wheels (37,43), **characterized in that** this frame member (31,33) is in the form of a V so that, when the front and rear wheels lie on a horizontal plane, the axis of rotation (xx', 22) of this frame member on the body (5) is located below the axis of rotation (zz') of each of the wheels (37,43).

2. Device according to Claim 1, **characterized in that** the axis of rotation (xx') of the frame member is located at the level of the intersection of the two branches of the V.

3. Device according to one of Claims 1 or 2, **characterized in that** it comprises means for adjusting the difference in height (f) existing between the axis of rotation (xx') of the frame member and the axis of rotation (zz') of a wheel (37,43).

4. Device according to Claim 3 in which the frame member comprises an anterior longitudinal element (31) and a posterior longitudinal element, **characterized in that** at least one of these longitudinal elements (31) is provided, at its free end, with means for fixing an adjusting plate (39) on which is mounted a hub (41) supporting a wheel (43).

5. Device according to Claim 4, **characterized in that** the adjusting plate (39) is arranged on the outer longitudinal element (31).

6. Device according to Claim 3, **characterized in that** the axle (23) comprises at least one fluted part and at least one of the frame members (31,33) comprises a recess of complementary shape allowing it to be connected to the fluted part in different angular positions.
